# EUROPEAN PATENT APPLICATION

(11) **EP 4 831 001 A1**
(43) Date of publication of application: **28.10.2026**
(21) Application number: 26173104.6
(22) Date of filing: 17.04.2026
(51) Int. Cl.: B60Q 1/26, B32B 27/32, B60R 19/03, B60R 19/50, F21S 43/14, F21S 43/15, F21S 43/19, F21S 43/20

(54) **A LIGHT-EMITTING BUMPER**

(30) Priority: 21.04.2025 CN 202520752947 U
(71) Applicant: Yanfeng Plastic Omnium Automotive Exterior Systems Co., Ltd., 201821 Shanghai (CN); OPmobility SE, 69007 Lyon (FR)
(72) Inventor: WANG, Liang, Shanghai, 201821 (CN); CHEN, Tuoyang, Shanghai, 201821 (CN)
(74) Representative: LLR

(57) **Abstract**

The present invention relates to a light-emitting bumper which comprises: a bumper body comprising a substrate (1) and a paint layer arranged on a display side of the substrate (1), with a plurality of light-emitting areas (2) in the paint layer; and a light-emitting lamp set arranged on a backside of the bumper body and comprising a base (8) and a circuit board (9) arranged on the base (8), wherein the base (8) is connected to the bumper body.

## Description

### Technical Filed

The present invention relates to the technical field of auto parts, in particular to a light-emitting bumper.

### Background

In recent years, with the rapid development of the new energy vehicle industry, the design of automobile exterior modeling has shown a trend of functional integration and visual symbolization. Among them, exterior lighting systems, especially light-emitting bumpers, have become core carriers of the brand design language.

In current solutions of light-emitting bumper, one needs to independently provide light distribution lenses, light homogenizing plates and supporting optical structural parts while relying on mechanical fasteners such as metal brackets and elastic buckles to realize multi-stage assembly with the bumper body, resulting in a complex structure and high production cost.

### Summary of the Invention

The purpose of the present invention is to simplify the structure of a light-emitting bumper and reduce its production cost.

To this end, provided is a light-emitting bumper comprising:
a bumper body comprising a substrate and a paint layer arranged on a display side of the substrate, with a plurality of light-emitting areas in the paint layer;
a light-emitting lamp set arranged on a backside of the bumper body and comprising a base and a circuit board arranged on the base, wherein the base is connected to the bumper body.

Further, the paint layer comprises a colored layer and a protective layer stacked in sequence from inside to outside, and the light-emitting areas are formed by laser engraving or etching the colored layer.

Further, the colored layer comprises a primer layer, a colored paint layer and a first varnish layer stacked in sequence from inside to outside.

Further, the primer layer has a thickness of more than 8 µm, the colored paint layer has a thickness of 15 µm ~ 25 µm, and the first varnish layer has a thickness of 10 µm ~ 15 µm.

Further, the protective layer comprises a transparent primer layer and a second varnish layer stacked in sequence from inside to outside.

Further, the transparent primer layer has a thickness of 5 µm ~ 10 µm, and the second varnish layer has a thickness of 10 µm ~ 15 µm

Further, the substrate is an injection-molded part made of polypropylene.

Further, the circuit board and the base form an integrated whole by bolts, gluing or welding, and the base and the bumper body form an integrated whole by bolts, gluing or welding.

Further, when gluing connection is adopted, a glue layer formed by gluing has a thickness of 1.0 mm ~ 2.0 mm and a width of 10 mm ~ 20 mm.

Further, when welding connection is adopted, the welding is vibration friction welding or hot plate welding.

Compared with the prior art, the present invention has the following advantages:
(1) The present invention realizes light emission of the bumper by directly connecting the light-emitting lamp set to the bumper body, so as to reduce the use of parts such as light distribution lenses and light homogenizing plates, thereby simplifying the product structural design and lowering the cost of parts.
(2) The present invention forms the light-emitting areas by stripping partial areas of the paint layer, making sure that light is emitted only from the light-emitting areas and ensuring the uniformity of light emission. When the light-emitting lamp set is turned on, light passes through the light-emitting areas and presents another color different from that of the colored layer, which allows to avoid the occurrence of color difference.

### Brief Description of the Drawings

Fig. 1 is a front view of a light-emitting bumper in an embodiment;
Fig. 2 shows a specific structure of a paint layer on a display side of the substrate in an embodiment;
Fig. 3 is a schematic view of a light-emitting lamp set in an embodiment;
Fig. 4 is a side view of a light-emitting bumper in an embodiment;

List of reference numerals: 1-substrate; 2-light-emitting area; 3-second varnish layer; 4-transparent primer layer; 5-first varnish layer; 6-colored paint layer; 7-primer layer; 8-base; 9-circuit board; 10-glue layer.

### Detailed Description of the Embodiments

The present invention is described in detail below in conjunction with the accompanying drawings and specific embodiments. The embodiments are implemented on the premise of the technical solutions of the present invention, and detailed modes of realization and specific operation processes are provided, but the protection scope of the present invention is not limited to the following embodiments.

### Embodiment

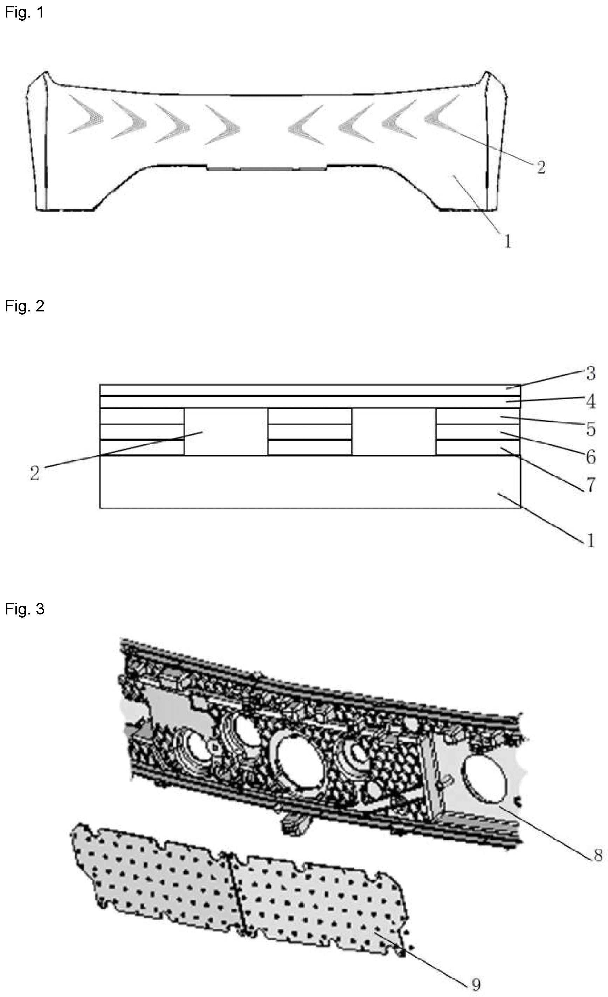

The present embodiment provides a light-emitting bumper, the specific structure of which is shown in Figs. 1-4, comprising a bumper body and a light-emitting lamp set arranged on a backside of the bumper body.

The bumper body comprises a substrate 1 and a paint layer arranged on a display side of the substrate 1, with a plurality of light-emitting areas 2 in the paint layer. The light-emitting lamp set comprises a base 8 and a circuit board 9 arranged on the base 8, wherein the base 8 is connected to the bumper body.

Referring again to Fig. 2, in this embodiment, the paint layer comprises a colored layer and a protective layer stacked in sequence from inside to outside, and the light-emitting areas 2 are formed by laser engraving or etching to strip the colored layer. The colored layer comprises a primer layer 7, a colored paint layer 6 and a first varnish layer 5 stacked in sequence from inside to outside. The protective layer comprises a transparent primer layer 4 and a second varnish layer 3 stacked in sequence from inside to outside.

In this embodiment, the primer layer 7 is a gray primer layer with a thickness of more than 8 µm, which has a good light-shielding effect and can prevent the light emitted by the light-emitting lamp set from passing through the primer layer 7 and being emitted. The colored paint layer 6 is a paint layer with a thickness of 15 µm ~ 25 µm and the same color as the vehicle body, so as to avoid the generation of color difference, improving in turn the aesthetics of the whole vehicle. The first varnish layer 5 has a thickness of 10 µm ~ 15 µm and can protect the colored paint layer 6. The transparent primer layer 4 has a thickness of 5 µm ~ 10 µm and can provide better adhesion between varnishs. The second varnish layer 3 has a thickness of 10 µm ~ 15 µm.

In this embodiment, the substrate 1 is an injection-molded part made of polypropylene which is preferably milky white, has good light transmission and light homogenization functions, and can ensure that the light emitted by the light-emitting lamp set passes through the light-emitting areas 2 and is emitted.

In this embodiment, the circuit board 9 and the base 8 form an integrated whole by bolts, gluing or welding, i.e., an assembly of the light-emitting lamp set is formed, as shown in Fig. 3. A plurality of LED lamp beads are integrated on a side of the circuit board 9 facing the substrate 1.

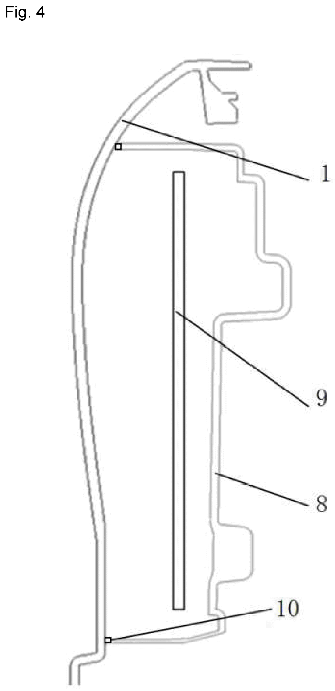

In this embodiment, the base 8 and the bumper body form an integrated whole by bolts, gluing or welding, wherein these connection modes need to meet the requirements of strength between parts as well as the watertight and airtight requirements. Specifically, when the gluing process is adopted, the glue layer 10 formed by gluing has a thickness of 1.0 mm ~ 2.0 mm and a width of 10 mm ~ 20 mm, as shown in Fig. 4. These parameter ranges can ensure both mechanical strength and sealing performance. When welding connection is adopted, vibration friction welding or hot plate welding is preferred, as these two hot-melting connection modes realize bonding through melting of the material itself, which can not only meet the designed strength requirements but also form a continuous and dense sealing interface.

The above description is only a preferred embodiment of the present invention, and is not intended to limit the present invention in other forms. Any person skilled in the art may modify or transform the disclosed technical contents into equivalent embodiments with equivalent changes.

## Claims

1. A light-emitting bumper **characterized in that** it comprises:
- a bumper body comprising a substrate (1) and a paint layer arranged on a display side of the substrate (1), with a plurality of light-emitting areas (2) in the paint layer; and
- a light-emitting lamp set arranged on a backside of the bumper body and comprising a base (8) and a circuit board (9) arranged on the base (8), wherein the base (8) is connected to the bumper body.

2. The light-emitting bumper according to claim 1, wherein the paint layer comprises a colored layer and a protective layer stacked in sequence from inside to outside, and the light-emitting areas (2) are formed by laser engraving or etching the colored layer.

3. The light-emitting bumper according to claim 2, wherein the colored layer comprises a primer layer (7), a colored paint layer (6) and a first varnish layer (5) stacked in sequence from inside to outside.

4. The light-emitting bumper according to claim 3, wherein the primer layer (7) has a thickness of more than 8 µm, the colored paint layer (6) has a thickness of 15 µm ~ 25 µm, and the first varnish layer (5) has a thickness of 10 µm ~ 15 µm.

5. The light-emitting bumper according to any one of claims 2 to 4, wherein the protective layer comprises a transparent primer layer (4) and a second varnish layer (3) stacked in sequence from inside to outside.

6. The light-emitting bumper according to claim 5, wherein the transparent primer layer (4) has a thickness of 5 µm ~ 10 µm, and the second varnish layer (3) has a thickness of 10 µm ~ 15 µm.

7. The light-emitting bumper according to any one of preceding claims, wherein the substrate (1) is an injection-molded part made of polypropylene.

8. The light-emitting bumper according to any one of preceding claims, wherein the circuit board (9) and the base (8) form an integrated whole by bolts, gluing or welding, and the base (8) and the bumper body form an integrated whole by bolts, gluing or welding.

9. The light-emitting bumper according to claim 8, wherein when gluing connection is adopted, a glue layer (10) formed by gluing has a thickness of 1.0 mm ~ 2.0 mm and a width of 10 mm ~ 20 mm.

10. The light-emitting bumper according to claim 8, wherein when welding connection is adopted, the welding is vibration friction welding or hot plate welding.
